# FASCICULE DE BREVET EUROPEEN

(11) **EP 3 549 420 B1**
(45) Date de publication et mention de la délivrance du brevet: **16.08.2023**
(21) Numéro de dépôt: 19166669.2
(22) Date de dépôt: 02.04.2019
(51) Int. Cl.: A01C 7/20, A01C 5/06

(54) **UNITÉ D'ENFOUISSEMENT DE PRODUIT AGRICOLE ET MACHINE AGRICOLE COMPORTANT UNE TELLE UNITÉ**
EINLEGERSYSTEM FÜR LANDWIRTSCHAFTLICHES MATERIAL UND LANDWIRTSCHAFTLICHE MASCHINE MIT DIESEM SYSTEM
AGRICULTURAL PRODUCT BURYING UNIT AND AGRICULTURAL MACHINE INCLUDING SUCH A UNIT

(30) Priorité: 03.04.2018 FR 1852896
(43) Date de publication de la demande: 09.10.2019
(73) Titulaire: Kuhn SAS, 67700 Saverne (FR)
(72) Inventeur: ANDRES, Christophe, 67700 Waldolwisheim (FR)
(74) Mandataire: Esch, Esther Evelyne

(56) Documents cités:
- EP-A1- 2 255 608
- WO-A1-2008/022373
- US-A- 4 408 551
- US-A- 5 619 939
- US-B1- 6 325 156

## Description

La présente invention se rapporte au domaine technique général du machinisme agricole et en particulier au domaine du semis et de l'enfouissement d'engrais.

L'invention porte sur un élément d'enfouissement de produit agricole liquide ou solide. Un tel produit agricole peut être de l'engrais liquide ou sous forme de granulés, de l'insecticide liquide ou sous forme de granulés, ou encore des graines.

Un élément d'enfouissement d'engrais est par exemple monté à l'avant d'une poutre support d'élément semeur monograine, soit directement en regard, soit décalé par rapport à l'élément semeur monograine et la sortie de graines de l'élément semeur monograine selon que l'on souhaite fertiliser dans le sillon recevant les graines ou à côté, suivant une ligne parallèle à ce sillon.

La figure 2 de la demande de brevet EP 2622954 B1 illustre un semoir monograine dans lequel un tel enfouisseur d'engrais 5 est disposé en léger décalage par rapport à l'élément semeur monograine 4.

Le document EP-A1-2.255.608 concerne une unité d'enfouissement faisant partie d'un semoir de précision.

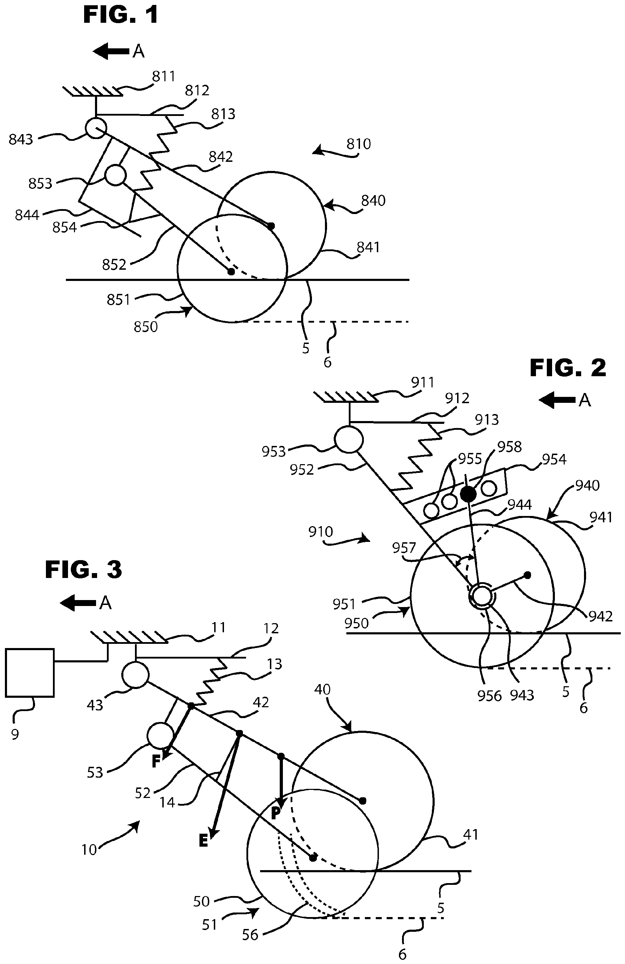

Un autre enfouisseur de graines 810 connu est schématisé en figure 1. L'enfouisseur 810 comporte un dispositif de référence 840 et un dispositif d'enfouissement 850. Le dispositif de référence 840 est monté à un support 812 via un premier pivot 843. Ce support 812 est lui-même monté à un châssis 811 considéré comme formant une référence fixe pour l'enfouisseur de graines 810. Le dispositif de référence 840 comporte une roue de jauge 841 prévue pour reposer au sol 5 et servir de référence de profondeur au dispositif d'enfouissement 850. Le dispositif d'enfouissement 850 comporte un disque ouvreur 851 et un bras 852. Le bras 852 porte le disque ouvreur 851. Le bras 852 est monté via un deuxième pivot 853 à un bras 842 du dispositif de référence 840. Le disque ouvreur 851 est prévu pour ouvrir un sillon 6 dans lequel des graines seront déposées. Le bras 852 présente une butée réglable 854 tandis que le bras 842 comporte une butée fixe 844. Un ressort 813 est monté entre le support 812 et le bras 852. Le ressort 813 tend à enfoncer le disque ouvreur 851 en terre. La roue de jauge 841 limite l'enfoncement du disque ouvreur 851 grâce à la venue en contact de la butée réglable 854 contre la butée fixe 844. En d'autres termes, le dispositif de référence 840 supporte le dispositif d'enfouissement 850.

Dans cet enfouisseur de graines 810, la force d'enfoncement du dispositif d'enfouissement 850 est appliquée par le ressort 813. Le dispositif de référence 840 est conçu pour limiter l'enfoncement du disque ouvreur 851. Cette structure oblige à concevoir le ressort 813 massif pour s'assurer du contact de la butée réglable 854 contre la butée fixe 844 et donc que le disque ouvreur 851 atteint bien la profondeur souhaitée.

Dans l'enfouisseur de graines 810 de la figure 1, pour un même paramétrage de l'organe élastique, la modification du réglage de profondeur par le jeu des butées 844 et 854 déplace angulairement le bras 852 par rapport au dispositif de référence 840. Le ressort 813 pivote alors autour de son point d'attache sur le support 912 et sa longueur, c'est-à-dire son état de compression, change. Ces changements d'orientation et de compression du ressort 813 modifient à somme non nulle l'effet de la force de terrage appliquée par le ressort 813 sur le dispositif d'enfouissement 850. Ainsi, la force de terrage évolue de manière indésirable lorsque le réglage de profondeur est modifié.

Un enfouisseur d'engrais 910 connu est schématisé en figure 2. Cet enfouisseur d'engrais 910 comporte un dispositif de référence 940 et un dispositif d'enfouissement 950. Le dispositif d'enfouissement 950 est monté à un support 912 via un premier pivot 953. Ce support 912 est lui-même monté à un châssis 911 considéré comme formant une référence fixe pour l'enfouisseur d'engrais 910. Le dispositif d'enfouissement 950 comporte un disque ouvreur 951, monté au bout d'un bras 952 et prévu pour ouvrir un sillon 6 dans lequel de l'engrais sous forme de granulés sera déposé. Un ressort 913 est monté entre le support 912 et le bras 952 pour permettre l'enfoncement du disque ouvreur 951 dans le sol 5. Le moyeu 956 du disque ouvreur 951 est traversant. Le moyeu traversant 956 enveloppe et porte un axe de pivotement 943 d'un dispositif de référence 940. Le dispositif de référence 940 comporte également une roue de jauge 941 et un bras 942. Une première extrémité du bras 942 est montée sur l'axe 943. La roue de jauge 941 est montée sur une deuxième extrémité du bras 942. La roue de jauge 941 est prévue pour reposer au sol et servir de référence de profondeur au disque ouvreur 951. Dans cet enfouisseur d'engrais 910, le bras 942 et la roue 941 sont disposés du côté du disque ouvreur 951 opposé au bras 952. Une grille de réglage 954 pourvue de perforations 955 est fixée sur le bras 952. Une poignée de réglage 944 que comporte le dispositif de référence 940 peut être ajustée en position angulaire 957 par rapport au bras 952, et bloquée dans l'une des perforations 955. Un moyen de blocage 958 est prévu pour maintenir la poignée de réglage 944 en position par rapport à la grille de réglage 954 (figure 2). La poignée de réglage 944 et le bras 942 étant fixes l'un par rapport à l'autre, l'ajustement de la poignée 944 par rapport au bras 952 du dispositif d'enfouissement 950 fait varier la position relative de la roue de jauge 941 par rapport au support 912 et donc la profondeur d'enfouissement du disque 951.

Dans le système de la figure 2, lors du réglage en profondeur du disque 951, la variation de la position angulaire 957 déplace fortement le bras 942 par rapport au bras 952. Le réglage de profondeur agit donc à la fois sur l'orientation et la longueur -donc l'état de compression- du ressort 913. De même que dans l'enfouisseur décrit en référence à la figure 1, les changements d'orientation et de compression du ressort 913 modifient à somme non nulle l'effet de la force de terrage appliquée par le ressort 913 sur le dispositif d'enfouissement 950. Ainsi, la force de terrage évolue de manière indésirable lorsque le réglage de profondeur est modifié.

Dans le système de la figure 2, le réglage de la position angulaire 957 exige de soulever manuellement la roue de jauge 941, ce qui est fastidieux et d'autant plus contraignant que ce réglage doit normalement être fait sur tous les dispositifs d'enfouissement que comporte la machine agricole (parfois 16, 24 ou 36 rangs, voire plus).

L'objectif de l'invention est de proposer une alternative améliorée simple aux systèmes d'enfouissement de produit agricole existants et si possible moins fastidieuse à régler.

L'invention porte donc sur une unité d'enfouissement de produit agricole pour machine agricole, configurée pour être montée fixement par rapport à la machine agricole, l'unité d'enfouissement comportant un dispositif de référence, un dispositif d'enfouissement, le dispositif de référence étant configuré pour reposer au sol en configuration de travail et former une référence de positionnement en profondeur pour le dispositif d'enfouissement, le dispositif d'enfouissement étant configuré pour enfouir un produit agricole en configuration de travail, le dispositif de référence étant configuré pour être monté articulé directement sur une référence fixe par rapport à la machine agricole. Dans l'unité d'enfouissement ci-dessus, le dispositif de référence est configuré pour peser sur le dispositif d'enfouissement en configuration de travail, le dispositif de référence formant moyen d'application de force d'appui sur le dispositif d'enfouissement.

Grâce à l'application du poids du dispositif de référence sur le dispositif d'enfouissement, le dispositif de référence agit ici sur le dispositif d'enfouissement vers le sol en configuration de travail, et non pas à l'opposé du sol comme c'est le cas dans le dispositif 810 illustré en référence à la figure 1. En d'autres termes, dans le dispositif 810, le poids du dispositif de référence est perdu, tandis que dans la présente invention, on en tire parti pour favoriser l'enfoncement du dispositif d'enfouissement. Le dispositif d'enfouissement bénéficie donc de la charge du poids du dispositif de référence pour son enfoncement. Il est ainsi possible de limiter les dimensions d'un éventuel deuxième moyen d'application de force d'appui sur le dispositif d'enfouissement, voire, lorsque le poids du dispositif de référence est suffisant pour garantir l'enfoncement du dispositif d'enfouissement à une profondeur souhaitée, de se passer d'un deuxième moyen d'application de force d'appui distinct du dispositif de référence.

Avantageusement, l'unité d'enfouissement comporte un deuxième moyen d'application de force d'appui, le deuxième moyen d'application de force d'appui étant configuré pour appliquer une force d'appui supplémentaire sur le dispositif de référence.

Dans une configuration particulière de l'unité d'enfouissement, le deuxième moyen d'application de force d'appui contribue à appliquer, ou applique lui-même, la force d'appui supplémentaire sur le dispositif de référence.

Avantageusement, le deuxième moyen d'application de force d'appui est configuré pour appliquer la force d'appui sur le dispositif de référence en configuration de travail, le dispositif de référence étant configuré pour répercuter la force d'appui sur le dispositif d'enfouissement.

Avantageusement, le deuxième moyen d'application de force d'appui est réglable en plusieurs positions par rapport au dispositif de référence ou par rapport à un support fixe par rapport à la machine agricole, de manière à permettre de faire varier la force d'appui exercée par le deuxième moyen d'application de force d'appui sur le dispositif de référence en configuration de travail.

Avantageusement, le deuxième moyen d'application de force d'appui comporte un organe élastique configuré pour appliquer la force d'appui sur le dispositif de référence en configuration de travail.

Avantageusement, l'organe élastique est réglable en position et/ou réglable en tension. Le moyen d'application de la force d'appui peut ainsi comporter un dispositif de réglage en position, par exemple pour régler la position d'un ressort de compression. Le moyen d'application de la force d'appui peut aussi, alternativement ou cumulativement avec le dispositif de réglage en position, être pourvu d'un dispositif de réglage en longueur et/ou d'un dispositif de réglage en tension, par exemple dans le cas d'un ressort de compression pour régler la longueur du ressort de compression.

Avantageusement, l'organe élastique comporte un ressort de compression, un ressort de traction, un ressort de torsion ou un tube de torsion.

Avantageusement, le deuxième moyen d'application de force d'appui est un dispositif à poids amovible(s) comportant au moins un poids amovible.

Avantageusement, le dispositif de référence comporte une roue de jauge, et/ou le dispositif d'enfouissement comporte un organe d'ouverture de sillon et un moyen de libération du produit agricole.

Avantageusement, l'unité d'enfouissement comporte un dispositif d'ajustement de profondeur, configuré pour permettre d'ajuster la profondeur d'enfouissement par le dispositif d'enfouissement par rapport au dispositif de référence. Grâce à cette butée réglable, et dans la disposition dans laquelle le dispositif de référence est configuré pour peser sur le dispositif d'enfouissement en configuration de travail, le réglage de profondeur est particulièrement simple. En effet, le réglage de profondeur se fait en position relevée de la machine. Dans cette position relevée, le dispositif de référence n'appuie plus sur le dispositif d'ajustement de profondeur. Ainsi, dans cette configuration de l'invention, l'utilisateur n'a pas à soulever le dispositif de référence pour régler la profondeur d'enfouissement, contrairement au dispositif d'enfouissement de la figure 2, ni à lutter contre un moyen d'application de force d'appui tel que le ressort 813 du dispositif d'enfouissement de la figure 1 qui plaque l'enfouisseur 850 contre la butée fixe 844. Le réglage de profondeur est donc facilité pour l'utilisateur.

En outre, dans un mode de réalisation particulier dans lequel l'unité d'enfouissement comporte en plus un organe élastique, la force d'appui de l'organe élastique n'est pas dépendante de la profondeur d'enfouissement. En effet, le dispositif de référence repose au sol (dans l'art antérieur comme dans l'invention), à une distance considérée constante du châssis de la machine agricole respective qui est lui-même à hauteur fixe par rapport au sol. Dans ce mode de réalisation, l'organe élastique n'est avantageusement pas affecté par un changement de profondeur d'enfouissement ; autrement dit, la pression appliquée sur le dispositif d'enfouissement par l'organe élastique est constante quel que soit le réglage de profondeur. Le réglage de l'unité d'enfouissement est donc plus fiable et prévisible que dans l'art antérieur.

Avantageusement, le dispositif d'ajustement de profondeur comporte une butée réglable, la butée réglable pouvant adopter au moins deux positions distinctes, chacune des deux positions correspondant à une profondeur d'enfouissement du produit agricole par le dispositif d'enfouissement.

Avantageusement, la butée réglable est une butée en spirale préférentiellement comportant des moyens de maintien en position, préférentiellement sous forme de dépressions concaves.

En variante, la butée réglable est réglable en position par vissage.

Avantageusement, l'invention porte sur une machine agricole comportant une unité d'enfouissement de produit agricole tel que décrite précédemment.

D'autres caractéristiques et avantages de l'invention se dégageront des exemples de réalisation non limitatifs de l'invention qui vont suivre et des dessins annexés dans lesquels :
- la figure 1 illustre schématiquement un enfouisseur d'engrais présent sur le marché ;
- la figure 2 illustre schématiquement un enfouisseur de graines présent sur le marché ;
- la figure 3 est un schéma de principe d'un enfouisseur de produit agricole selon la présente invention ;
- la figure 4 est une vue de côté d'un mode de réalisation de l'enfouisseur de la figure 3 en configuration de travail ;
- la figure 5 est une vue en perspective du côté opposé de l'enfouisseur de la figure 4 ;
- la figure 6 est un détail d'une butée de réglage de profondeur d'enfouissement que peut comporter l'enfouisseur d'engrais des figures 4 et 5 ;
- la figure 7 est un détail en perspective d'un dispositif d'ajustement de profondeur lié à rotation à la butée de réglage de profondeur de la figure 6.

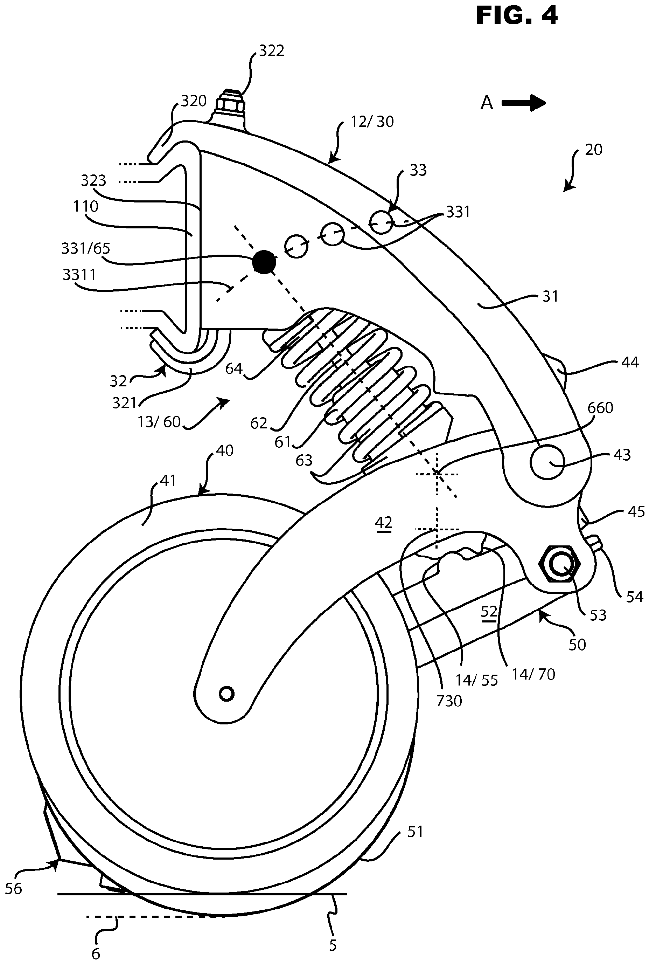

La figure 3 illustre de manière schématique le principe structurel d'une unité d'enfouissement 10 pour libérer un produit agricole. Un mode de réalisation particulier 20 de l'unité d'enfouissement 10 est ensuite décrit plus en détail en référence aux figures 4 à 6.

Le produit agricole libéré au moyen de l'unité d'enfouissement 10 est par exemple de l'engrais sous forme solide (tel que des granulés), de l'engrais liquide ou des graines. Une pluralité d'unités d'enfouissement 10 telles que celle décrite ci-après peut être mise en oeuvre dans une machine agricole 9 (représentée très schématiquement en figure 3) en nombre correspondant à un nombre de rangs de travail. La machine agricole est alors par exemple une machine de semis ou de fertilisation.

Comme il est visible en figure 3, l'unité d'enfouissement 10 comporte ici un support 12, un dispositif de référence 40 formant premier moyen d'application de force d'appui, un deuxième moyen d'application de force d'appui 13 (optionnel) et un dispositif d'enfouissement 50.

Le support 12 est fixé non limitativement à un châssis 11 de machine agricole. Dans la présente description, les termes avant, arrière, supérieur et inférieur sont utilisés en référence à une direction générale d'avance A de la machine agricole. La direction d'avance A est illustrée par une flèche aux figures 3 à 6.

Le support 12 peut être prévu pour s'étendre non limitativement à l'avant d'une poutre 110 du châssis 11 comme dans le mode de réalisation illustré aux figures 4 à 6. Alternativement et toujours non limitativement, le support 12 peut s'étendre sous une poutre du châssis 11, ou à l'arrière de celle-ci. Dans le mode de réalisation illustré en figure 4, la poutre 110 a une section avant en queue d'aronde. Cette forme n'est toutefois pas limitative et la poutre 110 peut adopter une forme carrée, rectangulaire ou autre.

Le dispositif de référence 40 comporte un pivot 43, un bras 42 et une roue de jauge 41.

Le bras 42 est monté par une première extrémité sur le support 12 via le pivot 43. La roue de jauge 41 est montée en une deuxième extrémité du bras 42.

Au travail, la roue de jauge 41 repose au sol 5 et roule sur celui-ci.

D'une manière générale, le dispositif de référence 40 forme un organe de référence en profondeur pour le dispositif d'enfouissement 50.

Le dispositif de référence 40 est articulé sur le support 12 indépendamment du dispositif d'enfouissement 50. En d'autres termes, le dispositif de référence 40 est articulé sur le support 12 sans interposition cinématique du dispositif d'enfouissement.

Plus généralement, le dispositif de référence 40 est monté par une liaison mécanique sur une référence fixe par rapport à la machine agricole indépendamment du dispositif d'enfouissement. Tel que décrit ci-dessus, la référence fixe est le support 12, fixé sur le châssis 11 de la machine agricole. En variante non illustrée, la référence fixe est par exemple le châssis 11 de la machine agricole.

En autre variante non illustrée, la liaison mécanique entre le dispositif de référence 40 et la référence fixe est différente du pivot 43. La liaison mécanique peut ainsi être non limitativement une liaison glissière ou une liaison par mécanisme déformable, comme un parallélogramme.

Le dispositif d'enfouissement 50 comporte un pivot 53, un bras 52, un moyen d'enfouissement 51 qui est ici un disque ouvreur, et un organe d'enfouissement 56.

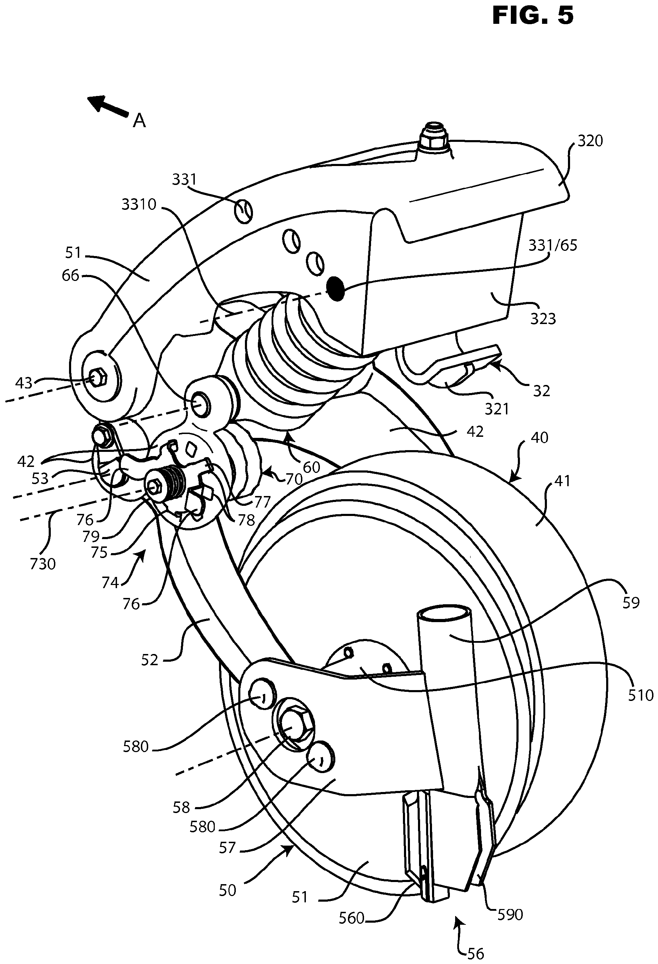

Le bras 52 est monté par une première extrémité sur le bras 42 via le pivot 53. Le pivot 53 s'étend en-dessous de 43 (figure 4). Le pivot 53 permet au dispositif d'enfouissement 50 de s'escamoter vers le haut lors du travail lorsqu'il rencontre un obstacle tel qu'une pierre. Le disque ouvreur 51 est monté en une deuxième extrémité du bras 52. Le disque ouvreur 51 est prévu pour trancher le sol. L'organe d'enfouissement 56 suit le disque ouvreur 51. L'organe d'enfouissement 56 comporte un soc prévu ouvrir un sillon 6 dans le sol 5, par exemple le soc 560 décrit en référence aux figures 4 et 5. Le produit agricole est alors déposé dans ce sillon 6 par l'organe d'enfouissement 56.

Le deuxième moyen d'application de force d'appui 13 est ici un organe élastique tel qu'un ressort de compression. Le deuxième moyen d'application de force d'appui 13 a pour rôle d'exercer une force d'appui sur le dispositif de référence 40 de manière à contraindre la roue de jauge 41 contre le sol 5 et à maintenir le contact de la roue de jauge 41 contre le sol 5 pour garantir la dépose du produit à la profondeur souhaitée.

Une butée 14 est prévue entre les bras 42 et 52. Ici, la butée 14 est ménagée sur le bras 52. La butée 14 sert de point de contact du bras 42 sur le bras 52, en un point intermédiaire du bras 52 entre le disque ouvreur 51 et le pivot 53. Grâce à ce contact, le poids P du dispositif de référence 40 s'applique sur le dispositif d'enfouissement 50 et contribue à son enfoncement dans le sol 5. Le dispositif de référence 40 forme ainsi premier moyen d'application de force d'appui sur le dispositif d'enfouissement 50, le poids P étant une première force d'appui. La structure de l'unité d'enfouissement 10 illustrée en figure 3 est donc conçue de sorte que le dispositif de référence 40 pèse sur le dispositif d'enfouissement 50. En outre, le dispositif de référence 40 répercute sur le dispositif d'enfouissement 50 la deuxième force d'appui F exercée sur lui par le deuxième moyen d'application de force d'appui 13. La force d'enfoncement E totale s'appliquant sur le dispositif d'enfouissement 50 est ainsi la somme de la force d'appui F exercée par le deuxième moyen d'application de force d'appui 13 sur le dispositif de référence 40, et du poids P du dispositif de référence 40 (voir flèches F, P et E en figure 3). Ainsi, grâce à l'application du poids du dispositif de référence 40 sur le dispositif d'enfouissement 50, la force d'appui F appliquée par le deuxième moyen d'application de force d'appui 13 pour faire pénétrer le dispositif d'enfouissement 50 dans le sol 5 peut être revue à la baisse. Ainsi, le deuxième moyen d'application de force d'appui 13 peut être allégé et sous-dimensionné par rapport aux solutions connues, voire supprimé lorsque le poids P suffit à atteindre la profondeur d'enfouissement souhaitée.

En variantes, le moyen d'appui formé par la butée 14 peut être réalisée différemment, par exemple être disposée sur le bras 42, ou encore résulter d'une coopération d'éléments, tels la protubérance 55 et le dispositif d'ajustement de profondeur 70 décrits plus loin (figure 4).

Le mode de réalisation 20 de l'unité d'enfouissement 10 est décrit ci-après en référence aux figures 4 à 6.

Le support 30 (figure 4) est un mode de réalisation particulier du support 12 (figure 3). Le support 30 comporte un bras 31 et un dispositif de fixation 32.

Le dispositif de fixation 32 présente ici un crochet supérieur 320, un crochet inférieur 321 et un système de serrage 322.

Ici, le crochet supérieur 320 est ici formé de corps avec le bras 31 tandis que le crochet inférieur 321 est mobile et ajustable par rapport au bras 31, ici verticalement. En variante non illustrée, le crochet supérieur 320 est mobile et ajustable par rapport au bras 31. Le crochet inférieur 321 peut également être formé de corps avec le bras 31 lorsque le crochet supérieur 320 est fixe ou formé de corps avec le bras 31.

Une face avant 323 du bras 31 est ici verticale. Le crochet supérieur 320, le crochet inférieur 321 et la face avant 323 forment ici un logement à section en queue d'aronde correspondant à la section avant de la poutre 110. Ainsi, dans sa configuration représentée, le dispositif de fixation 32 est prévu pour s'accrocher sur un profil externe correspondant du châssis 11 de machine agricole, ici le profil externe de la poutre 110. Le système de serrage 322 comporte ici une vis pour la fixation et le maintien en position sur le châssis 11.

Le bras 31 s'étend ici vers l'avant et vers le bas depuis la poutre 110 (figure 4).

Le support 30 comporte encore un dispositif de fixation haut 33. Le dispositif de fixation haut 33 présente ici une pluralité d'orifices 331 et une première tige 65. Les orifices 331 sont ménagés dans le bras 31, ici non limitativement à proximité du dispositif de fixation 32. Les orifices 331 traversent de préférence de part en part le bras 31, préférentiellement horizontalement et transversalement à la direction d'avance prévue A de la machine. Les orifices 331 sont ménagés les uns à côté des autres, ici non limitativement disposés selon un arc de cercle 3311 selon une vue de côté de l'unité d'enfouissement 10 (figure 4). De préférence, mais non limitativement, dans le mode de réalisation illustré, l'arc de cercle 3311 est centré en vue de côté sur l'axe de rotation 660 d'une deuxième tige 66 sur laquelle est monté un ressort de compression 61 décrit ci-après. La première tige 65 est en correspondance de forme avec les orifices 331, pour pouvoir être montée fixement mais de manière amovible dans l'un des orifices 331 (par exemple selon l'axe 3310 commun à la tige 65 et à l'orifice correspondant 331 tel qu'illustré en figure 5).

Le dispositif de référence 40 comporte ici (figures 4 à 6), en plus des éléments décrits en référence à la figure 3, une première butée 44 et une deuxième butée 45. Les butées 44 et 45 sont ici toutes les deux de corps avec le bras 42. La butée 44 forme butée basse, c'est-à-dire qu'elle limite l'abaissement de l'organe de référence 40 lors du relevage de la machine agricole et donc de l'unité d'enfouissement 10. La butée 44 vient alors en contact contre un élément transversal correspondant appartenant par exemple au bras 31. La butée 45 forme organe de contact pour la butée 54 décrite ci-dessous.

Le dispositif d'enfouissement 50 comporte ici (figures 4 à 6), en plus des éléments décrits en référence à la figure 3, une butée 54, une protubérance 55 et un organe d'enfouissement 56.

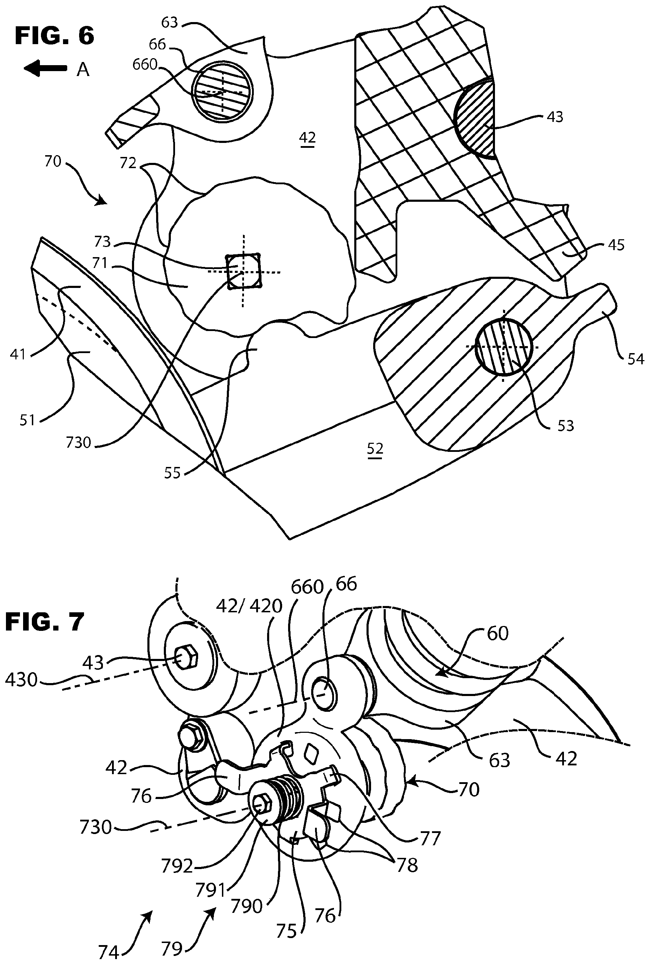

La butée 54 forme butée basse (figures 4 et 6), c'est-à-dire qu'elle limite l'abaissement du dispositif d'enfouissement 50 lors du relevage de la machine agricole et donc de l'unité d'enfouissement 10. La butée 54 vient alors en contact contre la butée 45 du dispositif de référence 40. La butée 54 est ici une saillie, de corps avec le bras 52. La butée 54 est ici montée à proximité immédiate du pivot 53, à l'opposé du disque ouvreur 51 par rapport au pivot 53.

La protubérance 55 (figures 4 et 6) forme organe de contact contre une butée en spirale 71 décrite ci-après, la protubérance 55 et la butée en spirale 71 faisant partie d'un dispositif d'ajustement de profondeur 70.

L'organe d'enfouissement 56 (figure 5) comporte ici un flasque 57, un soc 560 et un tube de descente 59.

Le flasque 57 est fixé en son extrémité avant sur le bras 52 par des moyens de fixation 580, ici des vis, non limitativement au nombre de deux. Un dispositif de fixation 58, ici également une vis, permet de fixer le moyeu 510 du disque ouvreur 51 sur le bras 52.

Le tube de descente 59, dont seule l'extrémité inférieure est représentée en figure 5, est fixé sur une extrémité arrière du flasque 57. Le tube de descente 59 est relié à une sortie d'un réservoir (non représenté) du produit agricole que comporte la machine. Le tube de descente 59 tel qu'illustré ici est prévu pour libérer de l'engrais sous forme de granulés dans le sillon 6. La libération de l'engrais est effectuée en une sortie inférieure 590 du tube de descente 59 (figure 5), au niveau du sol 5, ici dans le sillon 6.

L'extrémité basse du tube de descente 59 est fixée sur le soc 560, à l'arrière de celui-ci.

L'organe élastique 60 (figure 4) est un mode de réalisation particulier du deuxième moyen d'application de force d'appui 13 (figure 3). L'organe élastique 60 est ici réglable au moyen d'un dispositif de réglage en position. Ce réglage en position est ici permis par le dispositif de fixation haut 33 décrit précédemment. L'organe élastique 60 comporte un ressort de compression 61, un tourillon inférieur 63, un tourillon supérieur 64, une première tige 65 et une deuxième tige 66.

Le ressort de compression 61 est monté sur les tourillons 63 et 64, entre ceux-ci. Le tourillon supérieur 64 est monté sur le bras 31 dans l'un des orifices 331 via la première tige 65 (figures 4 et 5). La tige 65 peut être maintenue en place par une goupille, par exemple une goupille automatique. Le tourillon inférieur 63 est monté pivotant sur le bras 42 par l'intermédiaire de la deuxième tige 66 (figures 5 et 6).

L'organe élastique 60 comporte ici également un dispositif de réglage 62. Le dispositif de réglage forme ici simultanément dispositif de réglage en tension et dispositif de réglage en longueur. Le dispositif de réglage est ici une vis de réglage 62. La vis de réglage 62 est ici montée dans un alésage intérieur du tourillon inférieur 63. La vis de réglage 62 s'étend également longitudinalement à l'intérieur du ressort de compression 61 avec lequel la vis de réglage 62 est coaxiale. La vis de réglage 62 vient en son extrémité opposée à sa tête buter contre le tourillon supérieur 64.

Dans une configuration de réglage, la tige 65 est désengagée des orifices 331 et le ressort de compression 61 peut pivoter autour de l'axe 660. Une action sur la vis de réglage 62 permet alors d'ajuster la longueur du ressort 61 pour sa fixation sur le bras 31. Grâce à la vis de réglage 62, il est possible de placer un orifice non illustré du tourillon supérieur 64 en vis-à-vis de l'un des orifices 331. La tige 65 peut ensuite être insérée dans ledit orifice 331 et dans l'orifice du tourillon supérieur 64 pour fixer le ressort 61 par rapport au bras 31 (figures 4 et 5). Le choix de l'orifice 331 détermine l'orientation du ressort 61 par rapport à la deuxième tige 66 et au bras 42. La position angulaire du ressort 61 par rapport au bras 42 déterminera la direction de la force d'appui F du ressort 61 sur le bras 42.

Le dispositif d'ajustement de profondeur 70 comporte la butée en spirale 71 mentionnée ci-avant, un arbre 73 et un organe d'indexation 74. Le dispositif d'ajustement de profondeur 70 permet de régler la profondeur du sillon 6 par rapport au sol 5, donc ici la profondeur de travail du disque ouvreur 51 par rapport à la roue de jauge 41.

La butée en spirale 71 est un organe de contact dont le diamètre varie depuis son axe de rotation 730. Non limitativement, la butée en spirale 71 comporte deux faces latérales plates. La butée en spirale 71 comporte préférentiellement des moyens de maintien en position, ici sous forme d'évidements concaves 72. La forme du fond des évidements concaves 72 est préférentiellement à correspondance de forme avec la protubérance 55 pour un bon maintien en position angulaire de la butée en spirale 71.

La butée en spirale 71 est montée sur l'arbre 73, ici fixement. L'arbre 73 est ici généralement orienté selon un axe 730 parallèle aux axes 43 et 53, c'est-à-dire transversale à la direction générale d'avance A de la machine agricole (figure 5). La butée en spirale 71 peut être montée sur l'arbre 73 par soudage, vissage, à force ou autre moyen ou méthode de fixation.

L'organe d'indexation 74 se présente sous forme d'une griffe 75 et d'un dispositif de rappel 79. L'organe d'indexation 74 forme aussi organe de maintien en position pour le dispositif d'ajustement de profondeur 70. L'organe d'indexation 74 sert à déterminer et à conserver une profondeur d'enfouissement du dispositif d'enfouissement 50 par rapport au dispositif de référence 40.

La griffe 75 est une plaquette pourvue d'oreilles 76, de dents 77, d'encoches 78.

Les oreilles 76, ici au nombre de deux, forment organe de saisie de la griffe 75. Les dents 77 sont ménagées en saillie de la griffe 75.

Les encoches 78 sont ménagées en creux dans le bras 42. Les dents 77 peuvent être engagées dans les encoches 78 par soulèvement de la griffe 75 et maintenir la griffe 75 en position contre le bras 42.

La griffe 75 et la butée en spirale 71 sont solidaires angulairement l'une par rapport à l'autre, de sorte que le changement de position angulaire de la griffe 75 par l'utilisateur permet d'ajuster la position angulaire de la butée en spirale 71. La griffe 75 est préférentiellement montée coulissante sur l'arbre 73, par exemple à correspondance de forme avec une section (par exemple polygonale) de l'arbre 73.

Le dispositif de rappel 79 comporte ici un ressort 790, une rondelle 791 et une vis 792. Le ressort 790 est disposé autour de l'arbre 73 et maintenu contre la griffe 75 et l'arbre 73 par la vis 792 et la rondelle 791 (figure 7). Le dispositif de rappel 79 a pour fonction de plaquer la griffe 75 contre le socle 420 appartenant au bras 42. De la sorte, les dents 77 sont maintenues dans les encoches 78. Ainsi, la position adoptée par l'organe d'indexation 74 par rapport au bras 42 peut être maintenue de manière fiable.

Selon la position angulaire que prend la butée en spirale 71 autour de son axe de rotation 730 par rapport au bras 52 (ou à la protubérance 55), la distance entre l'axe 730 et le bras 52 varie. Il est ainsi possible de régler l'écartement entre les bras 42 et 52, donc la différence de hauteur entre la roue de jauge 41 et le disque ouvreur 51, et donc de déterminer la profondeur d'enfouissement du dispositif d'enfouissement 50.

La position des oreilles 76 permet de repérer le réglage à effectuer et de le reproduire sur les différentes unités d'enfouissement 10, 20 du semoir de manière à implanter le produit agricole à une profondeur homogène d'un rang à l'autre.

Le réglage de l'unité d'enfouissement 20 est opéré lorsque la machine est en position relevée, c'est-à-dire d'une part lorsque la butée 44 est en contact avec le bras 31, et d'autre part lorsque la butée 54 est en contact avec la butée 45. Ainsi, l'organe élastique 60 n'est pas comprimé entre les bras 31 et 42 et son réglage est sans effort pour l'utilisateur. De même, le dispositif d'ajustement en profondeur 70 n'est pas en contact avec le bras 52. Dans le mode de réalisation décrit en référence aux figures 4 à 6, le réglage du dispositif d'ajustement en profondeur 70 se fait sans outil. En effet, la butée en spirale 71 n'est pas en contact avec le bras 52 dans cette position relevée. Le réglage de profondeur d'enfouissement s'effectue donc de manière particulièrement simple et sans effort pour l'utilisateur. Il est ainsi possible de paramétrer l'unité d'enfouissement 20 aisément.

Le dispositif de référence 40 est configuré pour reposer au sol 5 en configuration de travail et former une référence de positionnement en profondeur pour le dispositif d'enfouissement 50. En effet, le disque ouvreur 51 tend à remonter sous l'effet des forces de friction du sol 5 lors du travail. Le dispositif de référence 40 pèse sur le bras 52 du dispositif d'enfouissement 50 au niveau de la butée 14 et s'oppose à la remontée du dispositif d'enfouissement 50. Par l'effet combiné des forces de friction au sol sur le disque ouvreur 51 et de la poussée exercée par le dispositif de référence 40 sur le bras 52, la profondeur d'enfoncement du disque ouvreur 51 et du soc 560, et donc la profondeur d'enfouissement du produit agricole sont garanties.

En variante non illustrée, l'organe élastique 60 à ressort de compression 61 est remplacé par un autre type d'organe élastique. Le ressort de compression 61 est par exemple remplacé par un ressort de traction, par exemple monté de l'autre côté des bras 31 et 42 par rapport à l'axe 43. Un dispositif de réglage en tension tel qu'une vis peut être prévu pour régler la tension du ressort de traction. Ce dispositif de réglage en tension permet également de régler la longueur du ressort de traction. Il est ainsi possible de régler en position le ressort de traction de manière analogue au réglage en position du ressort de compression 61 par la vis de réglage 62 et la tige 65.

Le ressort de compression 61 peut aussi être remplacé par un ressort de torsion, ou encore par un tube de torsion tel que décrit ci-dessous. Le ressort de torsion ou le tube de torsion peuvent être par exemple montés autour de l'axe 43 de pivotement entre le bras 31 et le bras 42. Le tube de torsion est par exemple du type de l'élément de torsion élastomère 34 représenté en figure 3 du brevet US 6454019 B1. Un tel tube de torsion comporte un fourreau rigide extérieur, un insert rigide interne et une pluralité de boudins en élastomère disposés entre le fourreau et l'insert. Le fourreau peut alors être fixé à l'un des bras 31 ou 42, tandis que la gaine est fixée à l'autre bras 42 ou 31. Le pivotement du fourreau et de la gaine l'un par rapport à l'autre comprime les boudins en élastomère. Le bras 31 formant référence fixe pour le tube de torsion, la compression des boudins en élastomère permet l'application par le tube de torsion d'une force d'appui sur le bras 42 d'effet analogue à la force d'appui exercée par l'organe élastique 60. Le cas échéant, un dispositif de réglage en tension, par exemple un système à levier, dans lequel le levier peut être bloqué en différentes positions par rapport au bras 31 (deux, trois, quatre positions ou plus), permettrait de régler la force d'appui du ressort de torsion ou du tube de torsion sur le bras 42.

En remplacement ou en complément de l'organe élastique 60, le deuxième moyen d'application de force d'appui 13 peut comporter un dispositif à poids amovible(s). Un dispositif à poids amovible(s) comporte par exemple un poids. Le nombre de poids n'est pas limitatif et peut différer, par exemple être égal à deux, trois, quatre ou plus. Il est alors possible de faire varier le poids par ajout ou suppression d'un ou de plusieurs poids. Lorsque le dispositif à poids amovible(s) comporte plusieurs poids, il est préférable que tous les poids aient la même forme et la même masse. En variante, au moins un premier poids est de forme et/ou de masse différente(s) d'au moins un deuxième poids.

En variante encore, non illustrée, le bras 52 est monté pivotant directement sur l'axe 43 de pivotement entre le bras 31 et le bras 42 de sorte que l'axe 43 de pivotement soit un axe de pivotement commun au dispositif de référence 40 et au dispositif d'enfouissement 50 par rapport au support 30, le dispositif de référence 40 pouvant toutefois pivoter autour de l'axe 43 indépendamment du dispositif d'enfouissement 50.

Dans une autre variante non illustrée, le dispositif d'ajustement en profondeur 70 comporte une butée distincte de la butée en spirale 71, par exemple une butée réglable en position par vissage.

En variante encore, un deuxième disque ouvreur est prévu sur le dispositif d'enfouissement 50. Alternativement, le disque ouvreur 51 est remplacé par un soc. Alternativement encore, le soc 56 est configuré pour à la fois trancher le sol, ouvrir lui-même le sillon 6 et y implanter le produit agricole.

Lorsque c'est possible, les différentes variantes ci-dessus peuvent être combinées entre elles, notamment lorsqu'elles portent sur des éléments distincts.

L'étendue de la protection de la présente invention est définie par les revendications jointes.

## Revendications

1. Unité d'enfouissement de produit agricole pour machine agricole, configurée pour être montée fixement par rapport à la machine agricole, l'unité d'enfouissement comportant un dispositif de référence (40, 41), un dispositif d'enfouissement (50), le dispositif de référence (40, 41) étant configuré pour reposer au sol en configuration de travail et former une référence de positionnement en profondeur pour le dispositif d'enfouissement, le dispositif d'enfouissement (50) étant configuré pour enfouir un produit agricole en configuration de travail, **caractérisée en ce que** le dispositif de référence (40, 41) étant configuré pour être monté articulé directement sur une référence fixe (11, 12) par rapport à la machine agricole, le dispositif de référence (40, 41) est configuré pour peser (P) sur le dispositif d'enfouissement (50) en configuration de travail, le dispositif de référence (40, 41) formant premier moyen d'application de force d'appui sur le dispositif d'enfouissement (50).

2. Unité d'enfouissement de produit agricole selon la revendication précédente, l'unité d'enfouissement (10 ; 20) comportant un deuxième moyen d'application de force d'appui (13 ; 60), le deuxième moyen d'application de force d'appui (13 ; 60) étant configuré pour appliquer une force d'appui (F) sur le dispositif de référence (40, 41), le dispositif de référence (40, 41) répercutant la force d'appui (F) sur le dispositif d'enfouissement (50) en configuration de travail.

3. Unité d'enfouissement selon la revendication précédente, le deuxième moyen d'application de force d'appui (60) admettant plusieurs réglages (33, 331, 65) de manière à permettre de faire varier la force d'appui (F) exercée par le deuxième moyen d'application de force d'appui (60) sur le dispositif de référence (40, 41).

4. Unité d'enfouissement de produit agricole selon l'une des revendications 2 et 3, le deuxième moyen d'application de force d'appui (13 ; 60) comportant un organe élastique (60) configuré pour appliquer la force d'appui (F) sur le dispositif de référence (40, 41) en configuration de travail.

5. Unité d'enfouissement selon la revendication 4, l'organe élastique (60) étant réglable en position par rapport au dispositif de référence (40, 41) et/ou par rapport à la référence fixe (11, 12) par rapport à la machine agricole, et/ou réglable en tension.

6. Unité d'enfouissement selon l'une des revendications 4 et 5, l'organe élastique (60) comportant un ressort de compression (61), un ressort de torsion, un ressort de traction ou un tube de torsion.

7. Unité d'enfouissement selon l'une des revendications précédentes, comportant un dispositif d'ajustement de profondeur (14, 70), configuré pour permettre d'ajuster la profondeur d'enfouissement par le dispositif d'enfouissement (50) par rapport au dispositif de référence (40).

8. Unité d'enfouissement selon la revendication précédente, le dispositif d'ajustement de profondeur (70) comportant une butée réglable (71), la butée réglable pouvant adopter au moins deux positions distinctes, chacune des deux positions correspondant à une profondeur d'enfouissement du produit agricole par le dispositif d'enfouissement (50), la butée réglable (71) étant préférentiellement une butée en spirale.

9. Unité d'enfouissement selon l'une des revendications 7 et 8, le dispositif d'ajustement de profondeur (14, 70) étant prévu entre un bras (42) du dispositif de référence (40, 41) et un bras (52) du dispositif d'enfouissement (50).

10. Machine agricole comportant une unité d'enfouissement (10, 20) de produit agricole selon l'une des revendications précédentes.

## Patentansprüche

1. Einheit zur Vergrabung von landwirtschaftlichen Produkten für landwirtschaftliche Maschine, die konfiguriert ist, um in Bezug auf die landwirtschaftliche Maschine fest angebracht zu werden, wobei die Vergrabungseinheit eine Bezugsvorrichtung (40, 41) und eine Vergrabungsvorrichtung (50) umfasst, wobei die Bezugsvorrichtung (40, 41) konfiguriert ist, um in der Arbeitskonfiguration auf dem Boden aufzuliegen und eine Tiefepositionierungsreferenz für die Vergrabungsvorrichtung zu bilden, wobei die Vergrabungsvorrichtung (50) konfiguriert ist, um in der Arbeitskonfiguration ein landwirtschaftlisches Produkt zu vergraben, **dadurch gekennzeichnet, dass** da die Bezugsvorrichtung (40, 41) konfiguriert ist, um direkt an einer festen Referenz (11, 12) bezüglich der landwirtschaftlichen Maschine angelenkt zu werden, die Bezugsvorrichtung (40, 41) konfiguriert ist, um in der Arbeitskonfiguration auf die Vergrabungsvorrichtung (50) zu wiegen (P), wobei die Bezugsvorrichtung (40, 41) ein erstes Mittel zur Auflagekraftanwendung auf die Vergrabungsvorrichtung (50) bildet.

2. Vergrabungseinheit für landwirtschaftliche Prodükte nach dem vorhergehenden Anspruch, wobei die Vergrabungseinheit (10; 20) ein zweites Mittel (13; 60) zur Auflagekraftanwendung umfasst, wobei das zweite Mittel (13; 60) zur Auflagekraftanwendung konfiguriert ist, um eine Auflagekraft (F) auf die Bezugsvorrichtung (40, 41) auszuüben, wobei die Bezugsvorrichtung (40, 41) die Auflagekraft (F) in der Arbeitskonfiguration auf die Vergrabungsvorrichtung (50) weiterleitet.

3. Vergrabungseinheit nach dem vorhergehenden Anspruch, wobei das zweite Mittel (60) zur Auflagekraftanwendung mehrere Einstellungen (33, 331, 65) zulässt, so dass die Auflagekraft (F) die durch das zweite Mittel (60) zur Auflagekraftanwendung auf die Bezugsvorrichtung (40, 41) ausgeübt wird, geändert werden kann.

4. Vergrabungseinheit für landwirtschaftliche Produkte nach einem der Ansprüche 2 und 3, wobei das zweite Mittel (13; 60) zur Auflagekraftanwendung ein elastisches Element (60) umfasst, das konfiguriert ist, um die Auflagekraft (F) in der Arbeitskonfiguration auf die Bezugsvorrichtung (40, 41) auszuüben.

5. Vergrabungseinheit nach Anspruch 4, wobei die Stellung des elastischen Elements (60) bezüglich der Bezugsvorrichtung (40, 41) und/oder bezüglich der festen Referenz (11, 12) in Bezug auf die landwirtschaftlische Maschine, und/oder die Spannung einstellbar ist (sind).

6. Vergrabungseinheit nach einem der Ansprüche 4 und 5, wobei das elastische Element (60) eine Druckfeder (61), eine Torsionsfeder, eine Zugfeder oder ein Torsionsrohr umfasst.

7. Vergrabungseinheit nach einem der hervorgehenden Ansprüche, die eine Tiefeeinstellungsvorrichtung (14, 70) umfasst, die konfiguriert ist, um die Vergrabungstiefe durch die Vergrabungsvorrichtung (50) in Bezug auf die Bezugsvorrichtung (40) einstellen zu können.

8. Vergrabungseinheit nach dem vorhergehenden Anspruch, wobei die Tiefeeinstellungsvorrichtung (70) einen einstellbaren Anschlag (71) umfast, wobei der einstellbare Anschlag mindestens zwei verschiedene Stellungen einnehmen kann, wobei jede der beiden Stellungen einer Vergrabungstiefe des landwirtschaftlichen Produktes durch die Vergrabungsvorrichtung (50) entspricht, wobei der einstellbare Anschlag (71) vorteilhafterweise ein spiralförmiger Anschlag ist.

9. Vergrabungseinheit nach einem der Ansprüche 7 und 8, wobei die Tiefeeinstellungsvorrichtung (14, 70) zwischen einem Arm (42) der Bezugsvorrichtung (40, 41) und einem Arm (52) der Vergrabungsvorrichtung (50) vorgesehen ist.

10. Landwirtschaftliche Maschine mit einer Vergrabungseinheit (10, 20) für landwirtschaftlische Produkte nach einem der hervorgehenden Ansprüche.

## Claims

1. Agricultural product burying unit for agricultural machine, configured so as to be mounted in a fixed manner relative to the agricultural machine, the burying unit including a reference device (40, 41), a burying device (50), the reference device (40, 41) being configured to rest on the ground in the work configuration and form a depth positioning reference for the burying device, the burying device (50) being configured to bury an agricultural product in the work configuration, **characterized in that** as the reference device (40, 41) is configured to be mounted in an articulated manner directly on a reference (11, 12) which is fixed relative to the agricultural machine, the reference device (40, 41) is configured to weigh (P) on the burying device (50) in the work configuration, the reference device (40, 41) forming a first means of applying a bearing force on the burying device (50).

2. Agricultural product burying unit according to the previous claim, the burying unit (10; 20) including a second bearing force applying means (13; 60), the second bearing force applying means (13; 60) being configured to apply a bearing force (F) on the reference device (40, 41), the reference device (40, 41) transferring the bearing force (F) to the burying device (50) in the work configuration.

3. Burying unit according to the previous claim, the second bearing force applying means (60) accepting several settings (33, 331, 65) so as to make it possible to cause the bearing force (F) exerted by the second means for applying a bearing force (60) on the reference device (40, 41) to change.

4. Agricultural product burying unit according to one of claims 2 and 3, the second bearing force applying means (13; 60) including an elastic element (60) configured to apply the bearing force (F) on the reference device (40, 41) in the work configuration.

5. Burying unit according to claim 4, the elastic element (60) being adjustable in position relative to the reference device (40, 41) and/or relative to the fixed reference (11, 12) relative to the agricultural machine, and/or being adjustable in tension.

6. Burying unit according to one of claims 4 and 5, the elastic element (60) comprising a compression spring (61), a torsion spring, a tension spring or a torque tube.

7. Burying unit according to one of the previous claims, including a depth control device (14, 70), configured to enable the burying depth to be adjusted by the burying device (50) relative to the reference device (40).

8. Burying unit according to the previous claim, the depth control device (70) including an adjustable stop (71), the adjustable stop being able to adopt at least two separate positions, each of the two positions corresponding to a depth of burial of the agricultural product by the burying device (50), the adjustable stop (71) being preferentially a coiled stop.

9. Burying unit according to one of claims 7 and 8, the depth control device (14, 70) being provided between an arm (42) of the reference device (40, 41) and an arm (52) of the burying device (50).

10. Agricultural machine including an agricultural product burying unit (10, 20) according to one of the previous claims.
